# EUROPÄISCHE PATENTSCHRIFT

(11) **EP 0 866 325 B1**
(45) Veröffentlichungstag und Bekanntmachung des Hinweises auf die Patenterteilung: **01.10.2003**
(21) Anmeldenummer: 97111546.4
(22) Anmeldetag: 08.07.1997
(51) Int. Cl.: G01M 1/36, G01M 1/32

(54) **Verfahren und Vorrichtung zum Auswuchten von Kraftfahrzeugrädern**
Method and device for balancing vehicle wheels
Méthode et dispositif pour équiliber des roues de véhicules

(30) Priorität: 09.09.1996 DE 19636542
(43) Veröffentlichungstag der Anmeldung: 23.09.1998
(73) Patentinhaber: Beissbarth GmbH, 80993 München (DE)
(72) Erfinder: Kelm-Kläger, Ronald, 80993 München (DE)
(74) Vertreter: Kirschner, Klaus Dieter, Dipl.-Phys.

(56) Entgegenhaltungen:
- EP-A- 0 694 775
- DE-A- 4 336 509
- US-A- 3 922 922
- US-A- 4 244 416
- US-A- 4 489 607
- US-A- 5 134 766
- US-A- 5 419 193

## Beschreibung

Die Erfindung betrifft ein Verfahren und eine Vorrichtung zum Ausgleich der Unwucht eines auf einer Wuchtmaschine montierten Kraftfahrzeugrades durch ein Ausgleichsgewicht, bei dem zur Bestimmung einer Ausgleichsposition und der Größe eines am Kraftfahrzeugrad anzubringenden Ausgleichsgewichtes aufgrund der bei einem Unwuchtmeßvorgang erhaltenen Meßwerte der jeweilige Radius und die jeweilige Ausgleichsebene für die Ausgleichsposition am Kraftfahrzeugrad mit Hilfe einer Tasteinrichtung abgetastet wird, mit einer Elektronikeinrichtung die Größe des am Kraftfahrzeugrad zu befestigenden Ausgleichsgewichtes bestimmt wird und das Ausgleichsgewicht an der vorbestimmten Ausgleichsposition angebracht wird.

Eine derartige Vorrichtung ist beispielsweise aus der DE 4229865 bekannt. Bei dieser Wuchtmaschine werden die Ausgleichspositionen elektronisch gespeichert, und zum Auffinden der gespeicherten Ausgleichsebene, in welcher die von der Ausgleichselektronik bestimmte Ausgleichsposition liegt, wird von der Elektronik ein Signal erzeugt, wenn durch die Tasteinrichtung die gespeicherte Ausgleichsebene nach der Bestimmung der Ausgleichsposition und der Größe des am Kraftfahrzeugrades anzubringenden Ausgleichsgewichtes angetastet wird. Damit ist nicht sichergestellt, daß der Taster tatsächlich an der Position bleibt, die er innehatte, als das Signal ertönte.

Der Erfindung liegt die Aufgabe zugrunde, sicherzustellen, daß die Ausgleichsgewichte an der richtigen Position angebracht werden.

Zur Lösung dieser Aufgabe ist das erfindungsgemäße Verfahren dadurch gekennzeichnet, daß die Ausgleichsposition oder die Ausgleichspositionen auf mechanischen Wege gespeichert werden, wobei eine mechanische Arretierung bewirkt, daß ein in der Tasteinrichtung vorgesehener Tastarm nur bis zu der jeweiligen Ausgleichsposition ausziehbar ist.

Ferner wird die Aufgabe der Erfindung durch eine Vorrichtung zur Durchführung des Verfahrens gelöst, wobei der Tastarm ausziehbar und schwenkbar gelagert ist und Vorrichtung dadurch gekennzeichnet ist, daß an dem Tastarm zwei Seilzüge befestigt sind, deren Seile bei der einen bzw. anderen Ausgleichsposition mechanisch arretierbar sind.

Nach einer vorteilhaften Ausgestaltung der erfindungsgemäßen Vorrichtung weist der eine Seilzug an dem Tastarm eine Zugfeder und einen Anschlag auf, wobei das Seil durch eine am Wuchtmaschinengehäuse befestigte Arretierungsbacke verläuft und am anderen Ende ebenfalls eine Zugfeder aufweist.

Nach einer vorteilhaften Ausgestaltung der erfindungsgemäßen Vorrichtung weist der andere Seilzug ein an dem Tastarm befestigtes Seil auf, das an einer Endlos-Seilschleife, wobei eine Bahn der Endlos-Seilschleife durch eine am Wuchtmaschinengehäuse befestigte Arretierungsbacke verläuft und eine andere Bahn der Endlos-Seilschleife einen Anschlag aufweist, der mit einer Arritiervorrichtung arretierbar ist.

Nach vorteilhaften Ausgestaltungen der erfindungsgemäßen Vorrichtung sind die am Wuchtmaschinengehäuse befestigten Arretierungsbacken mechanisch oder elektromagnetisch betätigbar, wenn sich der Tastarm in der jeweiligen Ausgleichsposition befindet.

Nach einer vorteilhaften Ausgestaltung der erfindungsgemäßen Vorrichtung ist an einem der Seilzüge ein Potentiometer angeordnet, um die Längsverschiebung des Tastarmes aus seiner Ausgangsposition zu messen.

Schließlich sind bei einer weiteren vorteilhaften Ausgestaltung der erfindungsgemäßen Vorrichtung die Seile des Seilzuges Zahnriemen.

Ein Ausführungsbeispiel der Erfindung wird nun anhand der beiliegenden Zeichnungen beschrieben. Es zeigen:
Figuren 1 bis 6 schematische Darstellungen der verschiedenen Positionen von Seilzügen, die an einem Tastarm befestigt sind; und
Figur 7 eine schematische Darstellung des Tastarmes bzw. dessen schwenkbare und verschiebbare Anordnung.

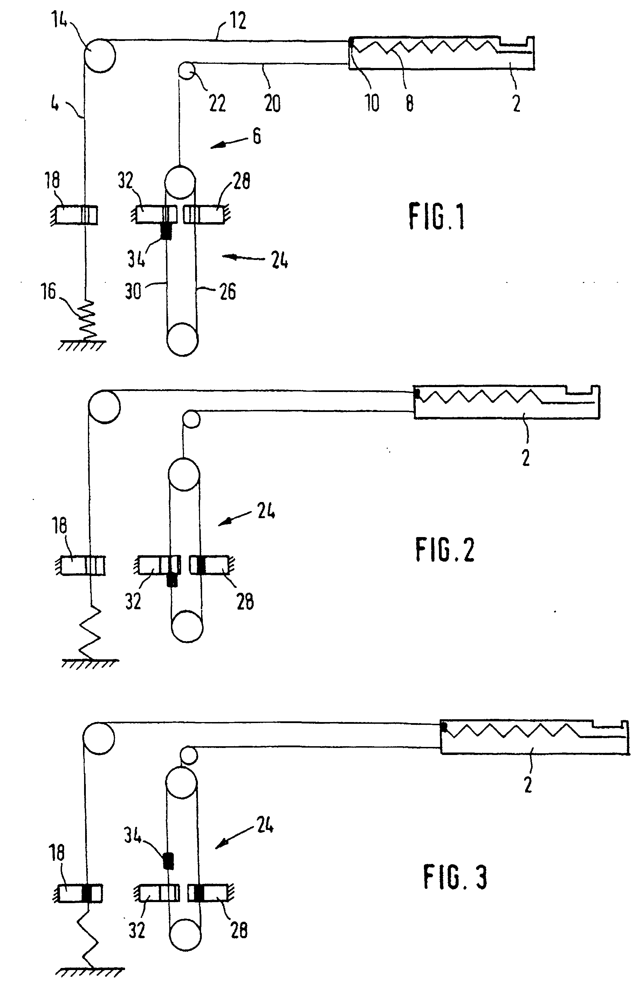

In Figur 1 ist ein Tastarm 2 schematisch dargestellt, an dem ein erster Seilzug 4 und ein zweiter Seilzug 6 befestigt sind. Der erste Seilzug 4 umfaßt eine in dem Tastarm 2 angeordnete Feder 8, einen Anschlag 10, einen Zahnriemen 12, der über eine Umlenkrolle 14 läuft, und eine Zugfeder 16, die an dem Wuchtmaschinengehäuse befestigt ist. Zwischen der Umlenkrolle 14 und der Zugfeder 16 liegt eine ebenfalls mit dem Wuchtmaschinengehäuse verbundene Arretierungsbacke 18, die über einen Elektromagneten betätigt bzw. geschlossen wird, wenn der Tastarm 2 beim Abtasten der Ausgleichsposition länger als beispielsweise zwei Sekunden still steht. Die Arretierungsbacke kann auch mechanisch, zum Beispiel mit Hilfe von Seilzügen, schließbar sein.

Der zweite Seilzug 6 umfaßt einen Zahnriemen 20, der an einem Ende an dem Tastarm 2 befestigt ist, über eine Umlenkrolle 22 läuft und am anderen Ende an einer Endlos-Seilschleife 24 endet, die über zwei Rollen 25, 27 verläuft, und an deren einer Bahn 26 eine mit dem Wuchtmaschinengehäuse verbundene Arretierungsbacke 28 angeordnet ist. An der anderen Bahn 30 der Endlos-Seilschleife 32 ist eine Arretierungsvorrichtung vorgesehen, die mit einem an dem Seil befestigten Anschlag 34 zusammenwirkt, wie noch beschrieben wird.

Als nächstes werden die verschiedenen Schritte beim Durchführen des Wuchtvorganges beschrieben.

Figur 1 zeigt die Ruhestellung der Anordnung, wobei die Arretierungsvorrichtung 32 geschlossen ist, sodaß der Anschlag 34 nicht durchgelassen wird. Die Arretierungsbacken 18 und 28 sind offen.

Wenn die innere Ausgleichsebene angefahren wird, bleibt die Arretierungsvorrichtung 32 geschlossen, sodaß der Anschlag 34 nicht hindurchtreten kann. Wenn der Tastarm an der inneren Ausgleichsebene angekommen ist, wird die Arretierungsbacke 18 arretiert, und die Arretierungsvorrichtung 32 wird geöffnet, sodaß der Anschlag 34 hindurchtreten kann. Die Arretierungsbacke 18 ist geöffnet. Der letztgenannte Zustand ist in Figur 2 dargestellt.

In Figur 3 ist der Betriebszustand dargestellt, bei dem mit dem Tastarm die äußere Ausgleichsebene angefahren wird. Dann ist die Arretierungsbacke 28 weiterhin geschlossen, die Arretierungseinrichtung 32 wird geöffnet, und die Arretierungsbacke 18 wird geschlossen. Damit ist die äußere Ausgleichsposition mechanisch arretiert.

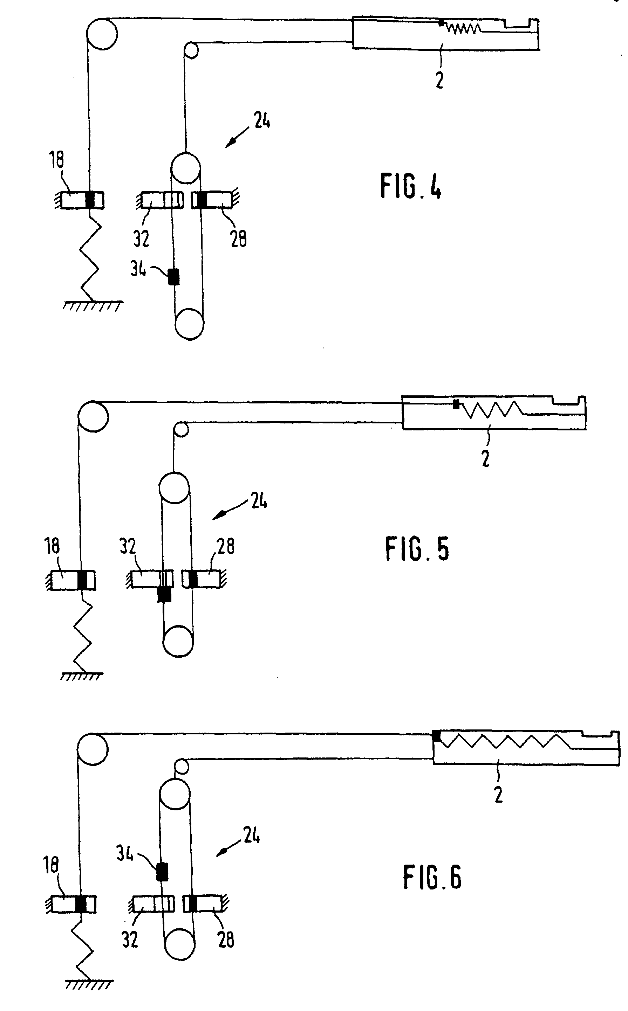

Figur 4 zeigt den Zustand, bei dem das Rad sich im Wuchtlauf befindet, und der Tastarm 2 in der zurückgezogenen Position ist.

Figur 5 zeigt den Zustand, in dem der Tastarm 2 zu der Ausgleichsposition in der inneren Ausgleichsebene gefahren ist, wobei die Arretierungseinrichtung 32 ebenso wie die Arretierungsbacken 18 und 28 geschlossen sind.

Figur 6 zeigt die Position des Tastarmes 2 in der Ausgleichsposition in der äußeren Ausgleichsebene, wobei die Arretierungsvorrichtung 32 geöffnet und die Arretierungsbacken 18 und 28 geschlossen sind. Der Tastarm hat die Ausgleichsposition in der äußeren Ausgleichsebene dann erreicht, wenn der Anschlag 10 an dem linken Ende (Blickrichtung wie in den Figuren 1 bis 6) des Tastarmes 2 anschlägt bzw. die Zugfeder 8 voll ausgedehnt ist.

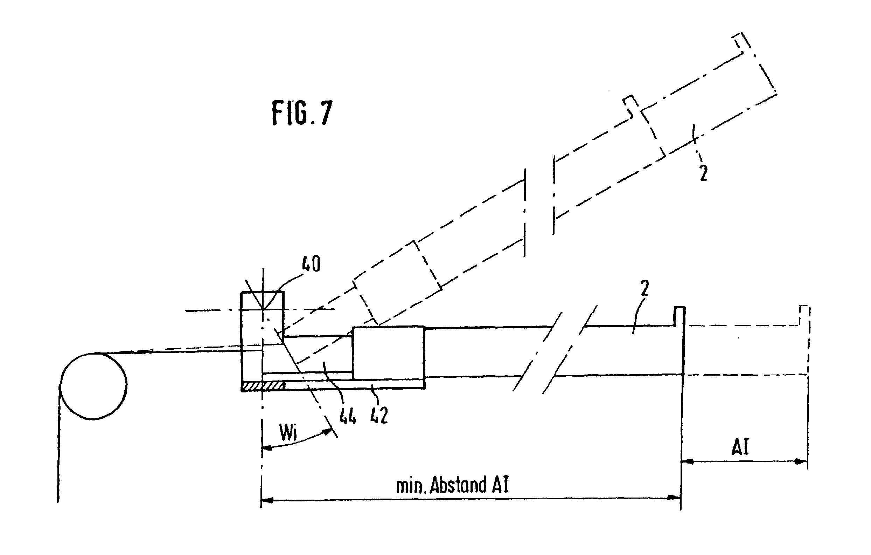

Figur 7 zeigt schematisch die schwenkbare Lagerung des Tastarmes 2. In dem Schwenkpunkt 40 ist ein Potentiometer angeordnet, welches den Schwenkwinkel mißt. Der Tastarm 2 ist in einer Halterung 42 angeordnet, die an dem Punkt 40 schwenkbar gelagert ist. Der Tastarm 2 ist auf einer Achse 44 ausziehbar gelagert.

Es ist ersichtlich, daß die Ausgleichsposition an der inneren und äußeren Ausgleichsebene beim Antasten vor dem Wuchten mechanisch gespeichert werden, sodaß sie nach dem Wuchten auf mechanischem Wege wiedergefunden werden können, um die Ausgleichsgewichte anzubringen.

## Patentansprüche

1. Verfahren zum Ausgleich der Unwucht eines auf einer Wuchtmaschine montierten Kraftfahrzeugrades durch ein Ausgleichsgewicht, bei dem zur Bestimmung einer Ausgleichsposition und der Größe eines am Kraftfahrzeugrad anzubringenden Ausgleichsgewichtes aufgrund der bei einem Unwuchtmeßvorgang erhaltenen Meßwerte der jeweilige Radius und die jeweilige Ausgleichsebene für die Ausgleichsposition am Kraftfahrzeugrad mit Hilfe einer Tasteinrichtung abgetastet wird, mit einer Elektronikeinrichtung die Größe des am Kraftfahrzeugrad zu befestigenden Ausgleichsgewichtes bestimmt wird und das Ausgleichsgewicht an der vorbestimmten Ausgleichsposition angebracht wird, **dadurch gekennzeichnet, daß** die Ausgleichsposition oder die Ausgleichspositionen auf mechanischen Wege gespeichert werden, wobei eine mechanische Arretierung bewirkt, daß ein in der Tasteinrichtung vorgesehener Tastarm nur bis zu der jeweiligen Ausgleichsposition ausziehbar ist.

2. Vorrichtung zum Ausgleich der Unwucht eines auf einer Wuchtmaschine montierten Kraftfahrzeugrades durch ein Ausgleichsgewicht, bei der zur Bestimmung einer Ausgleichsposition und der Größe eines am Kraftfahrzeugrad anzubringenden Ausgleichsgewichtes aufgrund der bei einem Unwuchtmeßvorgang erhaltenen Meßwerte der jeweilige Radius und die jeweilige Ausgleichsebene für die Ausgleichsposition am Kraftfahrzeugrad mit Hilfe einer Tasteinrichtung abgetastet wird, und bei der mit einer Elektronikeinrichtung die Größe.des am Kraftfahrzeugrad zu befestigenden Ausgleichsgewichtes bestimmt wird und das Ausgleichsgewicht an der vorbestimmten Ausgleichsposition angebracht wird, **dadurch gekennzeichnet, daß** die Ausgleichsposition oder die Ausgleichspositionen auf mechanischen Wege gespeichert werden, wobei eine mechanische Arretierung bewirkt, daß ein in der Tasteinrichtung vorgesehener Tastarm (2) nur bis zu der jeweiligen Ausgleichsposition ausziehbar ist, dass der Tastarm (2) schwenkbar gelagert ist, und dass an dem Tastarm (2) zwei Seilzüge (4,6) befestigt sind, deren Seile bei der einen bzw. anderen Ausgleichsposition mechanisch arretierbar sind.

3. Vorrichtung nach Anspruch 2, **dadurch gekennzeichnet, daß** der eine Seilzug in dem Tastarm (2) eine Zugfeder (8) und einen Anschlag (10) aufweist, durch eine am Wuchtmaschinengehäuse befestigte Arretierbacke (18) verläuft und am anderen Ende ebenfalls eine Zugfeder (16) aufweist.

4. Vorrichtung nach Anspruch 2, **dadurch gekennzeichnet, daß** der andere Seilzug ein an dem Tastarm (2) befestigtes Seil (20) aufweist, das an einer Endlos-Seilschleife (24) endet, wobei eine Bahn der Endlos-Seilschleife (24) durch eine am Wuchtmaschinengehäuse befestigte Arretierungsbacke (28) verläuft und eine andere Bahn (30) der Endlos-Seilschleife einen Anschlag (34) aufweist, der mit einer Arretierungsvorrichtung (32) arretierbar ist.

5. Vorrichtung nach einem der Ansprüche 2 bis 4, **dadurch gekennzeichnet, daß** die am Wuchtmaschinengehäuse befestigten Arretierungsbacken (18,28) mechanisch betätigbar sind, wenn sich der Tastarm (2) in der jeweiligen Ausgleichsposition befindet.

6. Vorrichtung nach einem der Ansprüche 2 bis 4, **dadurch gekennzeichnet, daß** die am Wuchtmaschinengehäuse befestigten Arretierungsbacken (18,28) elektromagnetisch betätigbar sind.

7. Vorrichtung nach einem der Ansprüche 2 bis 6, **dadurch gekennzeichnet, daß** an einem der Seilzüge (4,6) ein Potentiometer (14,22) angeordnet ist, um die Längsver-schiebung des Tastarmes (2) aus seiner Ausgangsposition zu messen.

8. Vorrichtung nach einem der Ansprüche 2 bis 7, **dadurch gekennzeichnet, daß** die Seile des Seilzuges (4, 6) Zahnriemen sind.

## Claims

1. Method for compensating the unbalance of an automotive wheel mounted on a wheel balancing apparatus by means of a compensating weight, in which, for determining a compensating position and the size of a compensating weight to be attached to the automotive wheel, on the basis of the measuring values obtained by the unbalance measuring process the respective radius and the respective balancing plane for the compensating position at the automotive wheel by means of a sensor means is sensed, the size of a compensating weight to be attached to the automotive wheels is determined by an electronic means, and the compensating weight is attached to the predetermined compensating position, **characterised in that** the compensating position or the compensating positions are stored in a mechanical way whereby a mechanical locking means has the effect that a sensor arm provided in a sensing means is extensible only to the respective compensating position.

2. Apparatus for compensating the unbalance of an automotive wheel mounted on a wheel balancing apparatus by means of a compensating weight, in which, for determining a compensating position and the size of a compensating weight to be attached to the automotive wheel, on the basis of the measuring values obtained by the unbalance measuring process the respective radius and the respective balancing plane for the compensating position at the automotive wheel by means of a sensor means is sensed, the size of a compensating weight to be attached to the automotive wheels is determined by an electronic means, and the compensating weight is attached to the predetermined compensating position, **characterized in that** the compensating position or the compensating positions are stored mechanically, that a sensor arm (2) provided in the sensor means, is adapted to be extended only up to the respective compensating position, that the sensor arm is pivotably supported and that two string assemblies (4, 6) are attached to the sensor arm (2), the strings of which are mechanically lockable at the one or the other compensating position respectively.

3. Apparatus according to claim 2, **characterized in that** one of the string assemblies comprises an extensible spring (8) in the sensor arm (2) and a stop (10) which runs through a locking block (18) attached to the housing of the balancing apparatus and has, at its other end, also an extensible spring (16).

4. Apparatus according to claim 2, **characterized in that** the other string assembly comprises a string (20) attached to the sensor arm (2) which string ends at an endless string loop assembly (24), whereby one run of the string of the string loop assembly (26) runs through a locking block (28) attached to the housing of the balancing apparatus, and the other run (30) of the string of the string loop assembly comprises a stop (34) which is lockable by means of the arresting assembly (32).

5. Apparatus according to one of the claims 2 to 4, **characterized in that** the locking blocks (18, 20) attached to the housing of the balancing apparatus are adapted to be actuated mechanically when the sensor arm (2) is in the respective compensation position.

6. Apparatus according to one of the claims 2 to 4, **characterized in that** the locking blocks (18, 20) attached to the housing of the balancing apparatus are adapted to be actuated electromechanically.

7. Apparatus according to one of the claims 2 to 6, **characterized in that** a potentiometer (14, 22) is arranged at one of the string assemblies (4, 6) in order to measure the longitudinal movement of the sensor arm (2) from its starting position.

8. Apparatus according to one of the claims 2 to 7 **characterized in that** the strings of the string assemblies (4, 6) are toothed belts.

## Revendications

1. Procédé pour équilibrer le balancement d'une roue de véhicule montée sur une machine à balancer au moyen d'un poids d'équilibrage, dans lequel procédé on balaie au moyen d'un dispositif de balayage, le rayon respectif et le plan d'équilibrage respectif pour la position d'équilibrage sur la roue du véhicule afin de déterminer une position d'équilibrage et la taille d'un poids d'équilibrage à disposer sur la roue du véhicule au moyen des valeurs de mesure obtenues au cours de la procédure de balancement, on détermine au moyen d'un dispositif électronique, la taille du poids d'équilibrage à fixer sur la roue de véhicule et on dispose le poids d'équilibrage sur la position d'équilibrage déterminée, **caractérisée en ce que** la position d'équilibrage ou les positions d'équilibrage sont stockées mécaniquement ; un système d'arrêt mécanique agissant de manière à ce qu'un bras balayeur prévu dans le dispositif de balayage ne puisse être tiré que jusqu'à la position d'équilibre.

2. Dispositif pour équilibrer le balancement d'une roue d'une roue de véhicule montée sur une machine à balancer au moyen d'un poids d'équilibrage, dans lequel procédé on balaie au moyen d'un dispositif de balayage , le rayon respectif et le plan d'équilibrage respectif pour la position d'équilibrage sur la roue du véhicule afin de déterminer une position d'équilibrage et la taille d'un poids d'équilibrage à disposer sur la roue du véhicule au moyen des valeurs de mesure obtenues au cours de la procédure de balancement, on détermine au moyen d'un dispositif électronique, la taille du poids d'équilibrage à fixer sur la roue de véhicule et on dispose le poids d'équilibrage sur la position d'équilibrage déterminée, **caractérisé en ce que** la position d'équilibrage ou les positions d'équilibrage sont stockées mécaniquement ; un système d'arrêt mécanique agissant de manière à ce qu'un bras balayeur (2) prévu dans le dispositif de balayage ne puisse être tiré que jusqu'à la position d'équilibrage , à ce que le bras balayeur (2) soit logé de façon pivotante et à ce que deux palans à câble (4,6) soient fixés sur le bras balayeur (2), dont les câbles peuvent être arrêtés mécaniquement lors d'une ou l'autre position d'équilibrage.

3. Dispositif selon la revendication 2, **caractérisé en ce qu'**un des palans à câble présente dans le bras balayeur (2), un ressort à traction (8) et une butée (10), que ledit palan à câble traverse une joue d'arrêt (18) fixée sur le boîtier de la machine à balancement et présente sur l'autre extrémité, également un ressort à traction (16).

4. Dispositif selon la revendication 2, **caractérisé en ce que** l'autre palan à câble présente un câble (20) fixé sur le bras balayeur (2) qui se finit sur une boucle de câble sans fin (24) ; une piste de la boucle de câble sans fin (24) circulant via une joue d'arrêt (28) fixée sur le boîtier des machines à balancer et une autre piste (30) de la boucle de câble sans fin présentant une butée (34) qui peut être arrêtée avec le dispositif d'arrêt (32).

5. Dispositif selon une des revendications 2 à 4, **caractérisé en ce que** les joues d'arrêt (18, 28) fixées sur le boîtier des machines à balancer peuvent être actionnées de façon mécanique lorsque le bras balayeur (2) se trouve dans la position d'équilibrage respectif.

6. Dispositif selon une des revendications 2 à 4, **caractérisé en ce que** les joues d'arrêt (18, 28) fixées sur le boîtier de machines à balancer peuvent être actionnées de façon électromagnétique.

7. Dispositif selon une des revendications 2 à 6, **caractérisé en ce qu'**un potentiomètre (14, 22) est disposé sur un des palans à câble (4, 6) afin de mesurer le déplacement longitudinal du bras balayeur (2) hors de sa position de sortie .

8. Dispositif selon une des revendications 2 à 7, **caractérisé en ce que** les câbles du palan à câble (4, 6) sont des courroies dentées .
